# EUROPEAN PATENT SPECIFICATION

(11) **EP 1 512 388 B1**
(45) Date of publication and mention of the grant of the patent: **27.09.2006**
(21) Application number: 03730218.9
(22) Date of filing: 10.06.2003
(51) Int. Cl.: A61G 3/06, B60P 1/44

(54) **HEIGHT-ADJUSTABLE VEHICLE ACCESS PLATFORM FOR INDIVIDUALS**
HÖHENVERSTELLBARE FAHRZEUG-ZUGANGSPLATTFORM FÜR PERSONEN
PLATEFORME D'ELEVATION PERMETTANT L'ACCES DE PERSONNES A DES VEHICULES

(30) Priority: 13.06.2002 ES 200201366
(43) Date of publication of application: 09.03.2005
(73) Proprietor: Fine Products S.A., 26509 Agoncillo (ES)
(72) Inventor: SALAZAR CORCUERA, Javier, 26509 AGONCILLO (LA RIOJA) (ES)
(74) Representative: Carvajal y Urquijo, Isabel
(86) International application number: PCT/ES2003/000279
(87) International publication number: WO 2003/105742

(56) References cited:
- EP-A- 0 381 497
- EP-A- 0 444 386
- WO-A-01/12120
- WO-A-02/071995

## Description

The present invention refers to a liftable platform for the access of persons to vehicles according to the preamble of claim 1, designed for facilitating the access of persons with reduced mobility to vehicles, overcoming heights of nearly two meters.

A platform of this kind is disclosed in EP 0444386.

Access to certain vehicles, the entrance platform of which is located at a certain height with regard to the platform or boarding quay, presents serious drawbacks for persons with mobility difficulties. The attempt has been made to minimize this drawback with the use of ramps which, in most cases, do not fully solve the drawback, even though they reduce it.

The object of the present invention is to provide an alternative liftable platform facilitating access to vehicles for persons with reduced mobility, as said platform can be lifted from the height of the quay or platform to that of the vehicle entrance platform, being able to overcome heights of nearly two meters, and thus facilitating both the boarding or getting on and deboarding or getting off operations.

The platform of the invention comprises a casing having an approximately rectangular, straight prismatic configuration, open at one of its walls, and which houses a carriage assembled in said casing by means of guides perpendicular to the open wall, the carriage being provided with drive means for causing its movement on said guides between a drawn in position, in which it is inside the casing, and an extracted position, in which it is completely outside of said casing. The platform also includes a flat, resistant and transitable structure connected to the carriage, in front of the same, by means of side lifting arms. This structure is movable, together with the carriage, between the drawn in or retraction position, in which said structure remains inside the casing together with the carriage, and the extracted position, in which it remains outside of the casing together with said carriage. The flat transitable structure is also connected to the carriage by means of lifting cylinders.

The flat transitable structure, which will constitute the platform on which the persons accessing or getting off of the vehicle are located, incorporates collapsible handrails hinged on the surface of this structure on its sides.

Furthermore, the flat transitable structure incorporates respective front and rear covers having different widths hinged on its transverse edges, both covers swiveling between a collapsed position on the surface of said structure, and a use position in which they cover the distance between said structure and the vehicle and ground, respectively.

The guides by means of which the carriage is assembled inside the casing consist of tracks assembled on the internal surface of the walls of the casing, which are perpendicular to the open wall, by means of pulleys allowing the partial longitudinal movement of said tracks. Furthermore, the carriage is provided on its sides with wheels for resting and sliding on the tracks.

The drive means of the carriage consist of a motor assembled on said carriage and driving a pinion meshing with a solidly fixed rack of the casing, which runs in a direction perpendicular to the open wall of said casing.

With regard to the side arms for connecting the flat structure to the carriage, each one of them is composed of two horizontal arms located on the same vertical plane, between which ends respective plates are hinged, by means of which a hinged parallelogram is defined which is connected to the carriage through one of said plates, whereas on the upper arm it rests and is fixed to the transitable structure.

The entire constitution set forth, as well as the operation of the platform of the invention, will be explained in detail below with the aid of the attached drawings, wherein a non-limiting, exemplary embodiment is shown.

In the drawings:
Figures 1 and 1a shows a plan view of a platform constituted according to the invention, in an extracted position.
Figure 2 shows a longitudinal section of the platform in an extracted position, according to cut line II-II of figure 1.
Figure 3 shows an upper plan view of the carriage.
Figure 4 shows a cross-sectional view of the carriage, according to cut line IV-IV of figure 3.
Figure 5 shows a plan view of the arms supporting the flat transitable structure.
Figure 6 shows a side view of the arms, according to direction A of figure 5.
Figure 7 shows an upper plan view of the flat transitable structure.
Figure 8 shows a longitudinal sectional view of the flat transitable structure, taken along cut line VIII-VIII of figure 7.
Figure 9 shows an upper plan view of the larger cover hinged to the flat transitable structure.
Figure 10 shows a longitudinal sectional view of the same cover, taken along cut line X-X of figure 9.

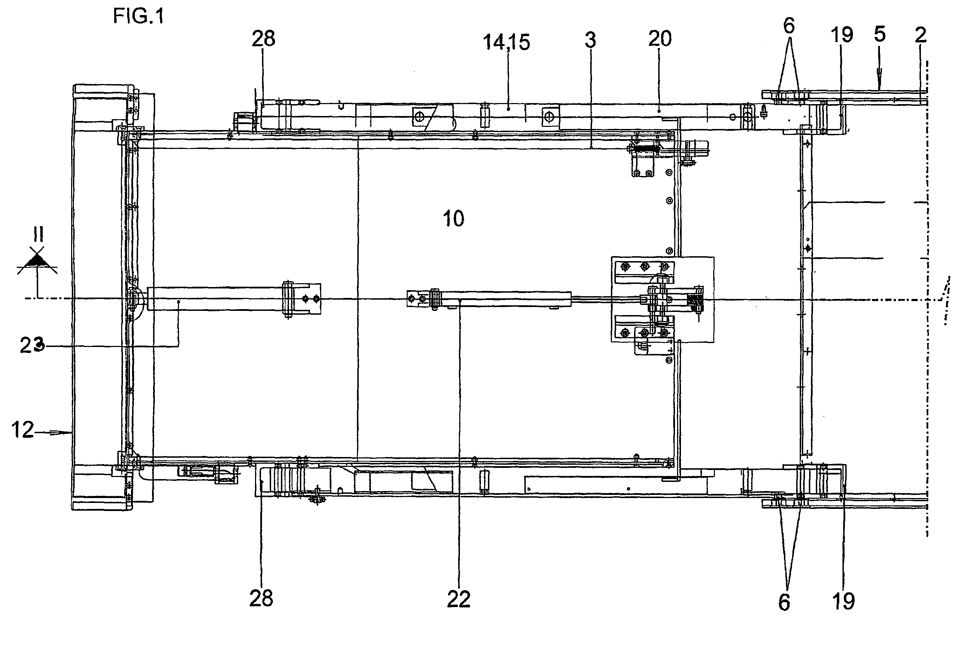

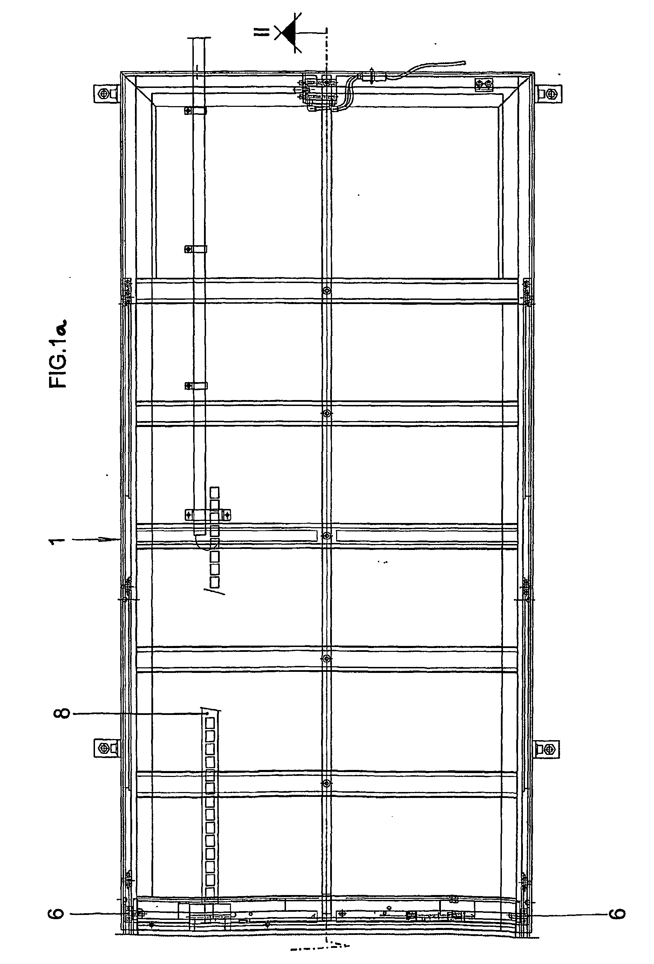

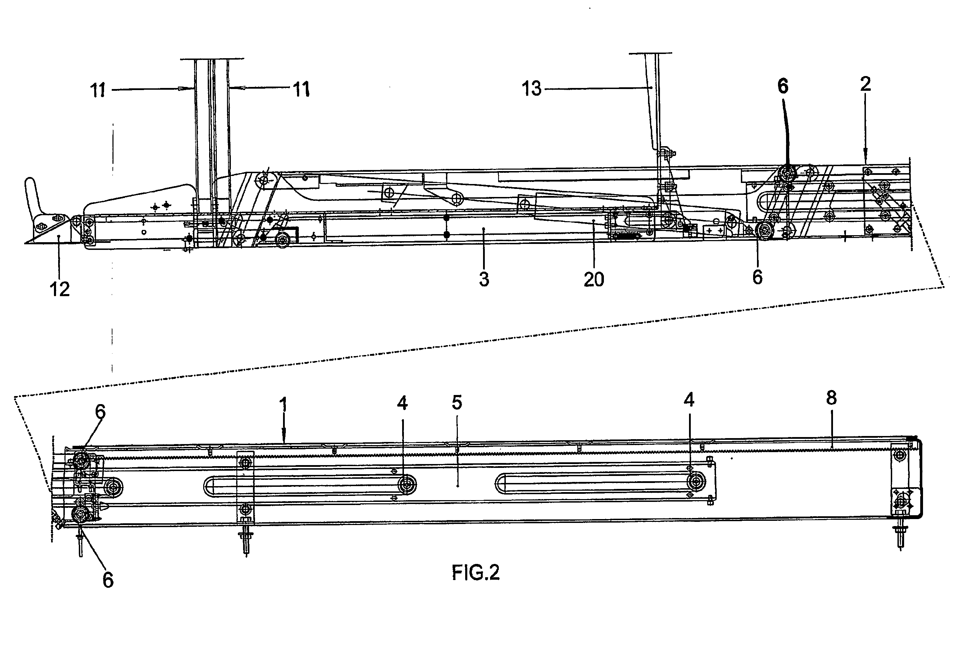

As can be seen in figures 1, 1a and 2, the platform comprises a casing 1 having an approximately rectangular, straight prismatic configuration, open at one of its smaller walls. A carriage 2 and a flat, transitable, resistant, structure 3 are assembled inside this casing with the ability to move along said casing.

Pulleys 4 are fixed to the internal surface of the larger walls of the casing 1, on which longitudinal guides 5 are assembled and are able to slide. In turn, the carriage 2 is assembled on these guides 5, with the ability to slide thereon.

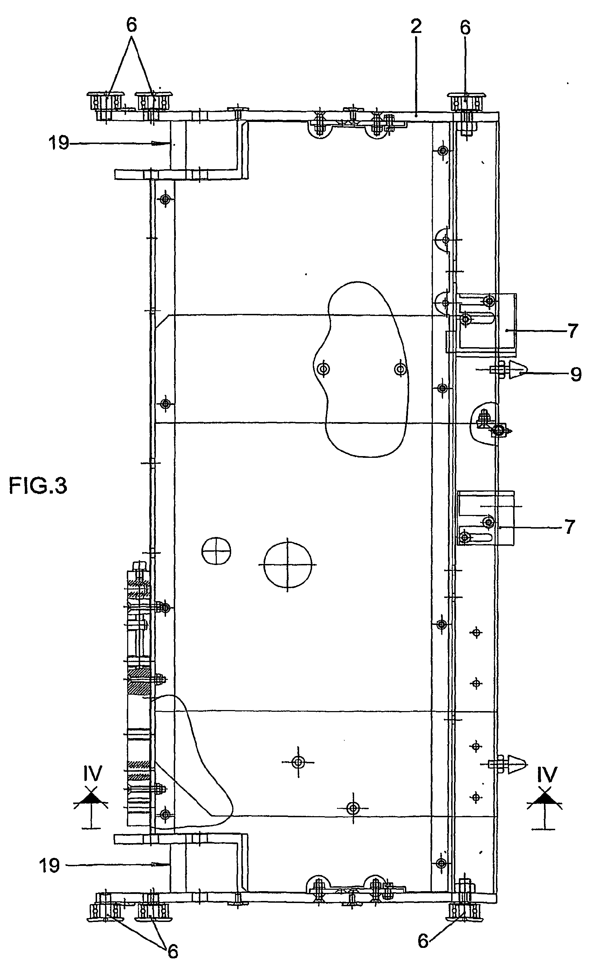

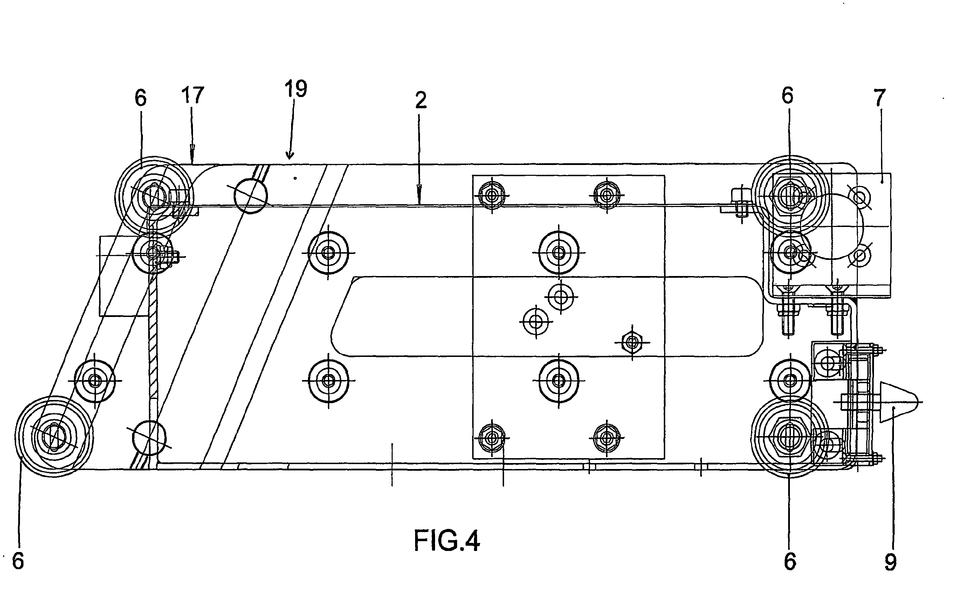

Therefore, as can be seen better in figures 3 and 4, the carriage 2 is composed of a frame provided with wheels 6 resting and rolling on the upper and lower edges of the guides 5.

As can be seen in figures 3 and 4, the carriage 2 is provided with a bearing 7 on which a motor is assembled which drives a pinion meshing with the solidly fixed rack 8, shown in figure 2, of the casing 1. Under the bearings 7, the carriage bears a stop 9 for limiting the internal housing position in the casing, as will be set forth below.

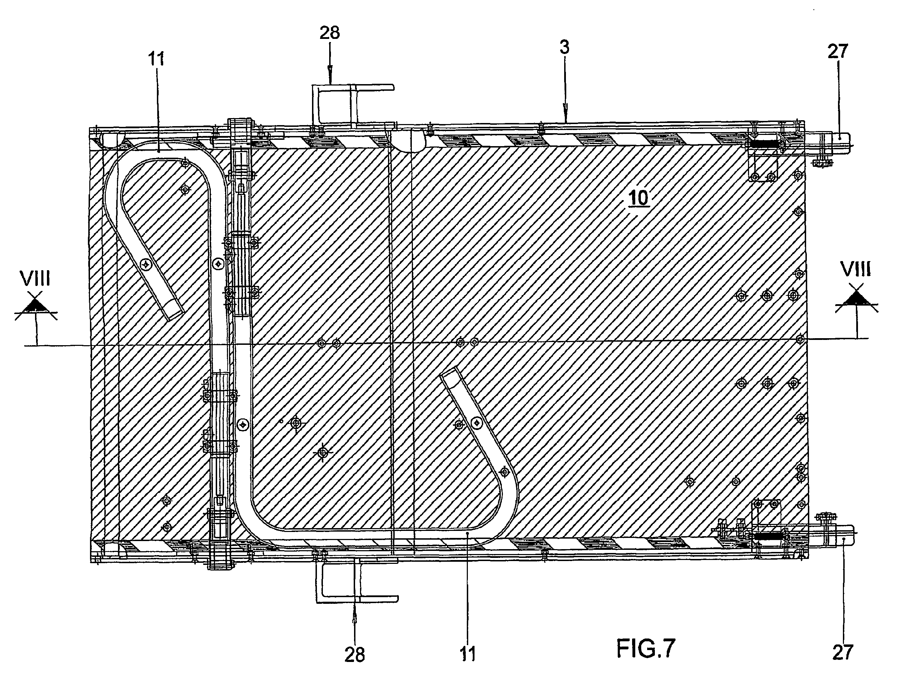

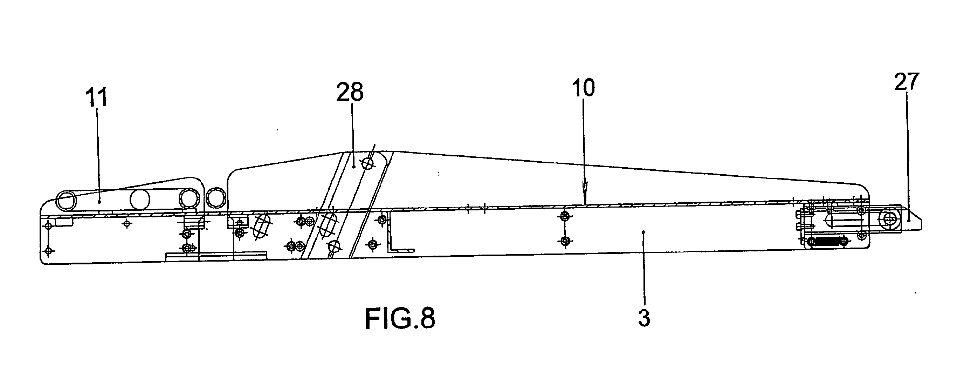

The flat transitable structure 3 is shown in figures 7 and 8 and, as can be seen in the drawings, it is closed on the upper part by a flat plate 10 defining the surface on which the passengers will be located for getting on or off of the vehicle. This structure incorporates handrails 11 hinged on its sides, which are collapsible on the plate 10. Furthermore, as can be seen in figure 2, hinged on its transverse edges it incorporates respective front and rear covers, referenced with numbers 12 and 13, having a different width and which can swivel between a collapsed position on the plate 10 of the transitable structure, and a use position, in which the front cover 12 will rest on the ground, whereas the rear cover 13 will rest on the platform of the vehicle, going through upright positions at which the rear cover 13 is shown in figure 2.

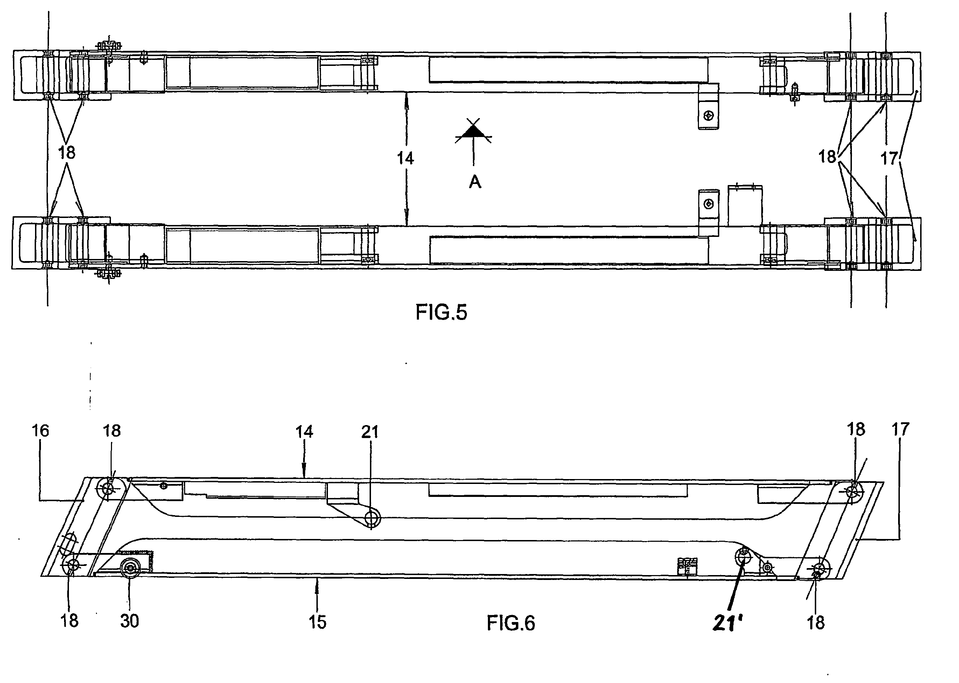

The transitable structure 3 is connected to the carriage 2 by means of two side arms on either side, an upper arm 14 and lower arm 15, figures 5 and 6, located on either side in the same vertical plane, which arms are hinged at their ends by respective plates 16 and 17, by means of pins 18, defining a hinged parallelogram. Each pair of arms is connected through the plate 17 to the carriage 2, which is provided from its front edge with grooves or housings 19 in which the plate 17 is housed and fixed (figure 1).

The transitable resistant structure 3 rests and is fixed on the upper arm 14 of each pair of side arms.

A hydraulic cylinder 20 which, at its front end, is connected to the tab 21 of the upper arm 14, and at its rear end, to the tab 21' of the lower arm 15, is assembled between the arms 14 and 15 of each side, such that actuation thereof causes the deformation of the parallelogram defined by both arms and the plates 16 and 17, and therefore the lifting of the assembly composed of the resistant structure 3 and side arms 14 and 15, which swivel with regard to the carriage 2, on the hinge pins 18 connecting said arms to the rear plate 17.

Operation of the front cover 12 and the rear cover 13 is carried out by means of hydraulic cylinders 22 and 23 assembled underneath the plate 10, as can be seen in figure 1.

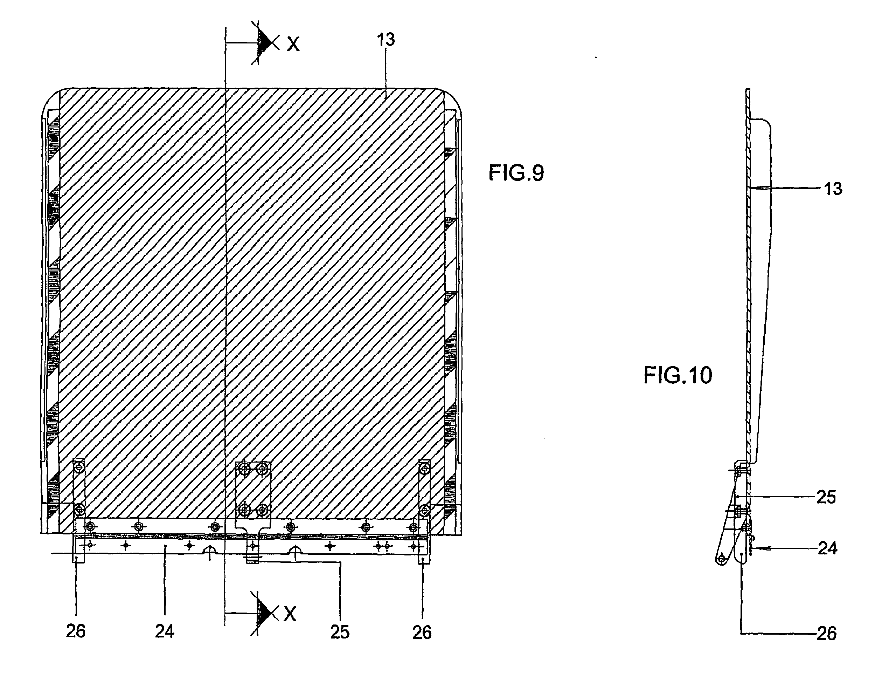

As can be seen in figures 9 and 10, the rear cover 13 is provided with a joint hinge 24 on the edge connected to the transitable structure 3, as well as with a lower rotating bearing 25 for connection to the operating cylinder 22. On the same edge, this cover is provided with locking push rods 26.

As can be seen in figures 7 and 8, the resistant structure 3 is provided on the rear part with locking assemblies 27. On its sides, it is provided with bearings 28 on which the front plate 16, figure 6, of each pair of arms is coupled and fixed.

The platform of the invention will be provided with the corresponding electric system regulating and controlling the different movements of the platform by means of ends of run providing signals of the positions of the different movable elements, and by means of a printed board controlling electric input and output signals to electrovalves. In the same manner, it will include a hydraulic system, with its corresponding electrovalves, motor driven pump and tank for feeding the different cylinders. It also includes a pneumatic system for locking the platform when it is completely drawn in, for preventing the accidental extraction.

With the constitution disclosed and starting from the retracted or drawn in position, the extraction or emergence of the resistant structure is carried out by means of the electric motor assembled on the carriage 2 and which drives a pinion meshing with the rack 8. During these movements, the board of the electric system is provided with a safety measure through an adjustable potentiometer, which stops the extraction and retraction if consumption of the electric motor exceeds the intensity to which it has been set.

As a result of the guides 5, pulleys 8 and wheels 6 of the carriage 2, it is achieved that most of the carriage 2 is left outside of the casing 1. From this situation, in order to raise or lower the flat structure 3, the single-acting cylinders 20 located between the arms 14 and 15, as explained, are actuated. With this actuation, the resistant structure is lifted up to the desired height. The front cover 12 will turn, to be located in its horizontal position, when the structure 3 occupies the lower position, so that the cover 2 can rest on the ground. As has been previously indicated, the actuation of this cover is carried out by means of a single-action cylinder, and its return by means of a spring. The cylinder is connected to the same circuit as the lifting and lowering cylinders of the resistant structure 3, such that when this structure rests on the ground, this circuit loses pressure and the force of the spring of the cylinder makes the cover rotate until it rests on the ground. When the resistant structure 3 is no longer resting on the ground, the circuit gathers pressure and, before lifting up, the front cover 12 is placed in the upright position.

With regard to the rear cover 13, this occurs by means of the double-action cylinder 22, figure 1, acting through cam rollers and guides, and which allow a 180° rotation of said cover.

When the resistant structure 3 is in a use position, the handrails 11 can be lifted, being placed in the upright position, remaining locked. Both the lifting and collapsing of these handrails can be carried out either manually or by means of hydraulic cylinders.

When the resistant structure 3 is in a lower position, the cover 13 will remain in the upright position, and when the structure 3 reaches the desired height, corresponding to that of the vehicle from or to which the passengers should be moved, said cover collapses until it rests on the entrance or platform of the vehicle.

The platform of the invention is designed to be assembled on the structure or chassis itself of the vehicle, being able to overcome gaps between the vehicle and the platform for getting on or off.

The platform will only be able to be activated from the control panel of the vehicle if the vehicle is stopped. Furthermore, when the platform is activated, a signal will be produced which will actuate the brake of the vehicle. Although it is subsequently deactivated from the control panel of the vehicle, the platform remains inoperative only when it is drawn in, and at that time the brake of the vehicle is unlocked.

As can be seen in figure 6, the lower arm 15 of each pair of arms is provided with a wheel 30 which will rest on the bottom of the casing 1 when drawing in said arms inside the casing.

## Claims

1. A liftable platform for access of persons to vehicles comprising a carriage and a flat, resistant and transitable structure (3) connected to the carriage in the front part thereof by means of side lifting arms (14-15), **characterized in that** it further comprises a casing (1) having an approximately rectangular, straight prismatic configuration, open at one of its walls; the carriage being mounted inside the casing by means of guides (5) perpendicular to the open wall, and provided with drive means for moving on said guides; the structure (3) being movable with said carriage between a retraction position, in which it remains housed in the casing (1), and an extraction position, in which it remains outside of said casing; the resistant structure also being connected to the carriage by means of lifting cylinders (20).

2. A platform according to claim 1, **characterized in that** the guides (5) consist of tracks, assembled on the internal surface of the walls of the casing perpendicular to the open wall thereof through pulleys (4) allowing the partial longitudinal movement of said tracks, the carriage (2) in turn being provided on its sides with wheels (6) for resting and sliding on said tracks, to allow a relative partial movement of tracks and carriage.

3. A platform according to claim 1, **characterized in that** the drive means of the carriage comprise a motor assembled on said carriage and driving a pinion meshing with a solidly fixed rack (8) of the casing (1), which runs in a direction perpendicular to the open wall of said casing.

4. A platform according to claim 1, **characterized in that** the side arms connecting the flat structure (3) to the carriage (2) comprise two horizontal and parallel arms on either side, an upper arm (14) and a lower arm (15), located on the same vertical plane, between the ends of which respective plates, a front plate (16) and a rear plate (17), are hinged, the arms and the plates defining a hinged parallelogram, connected to the carriage (2) through the rear plate (17), whereas the transitable resistant structure (3) is coupled and fixed on the front plate (16).

5. A platform according to claim 4, **characterized in that** the lower arm (15) of each pair of arms is provided, near its front end, with a wheel (30) resting on the bottom of the casing when retracting said arms inside the casing.

6. A platform according to claim 1, **characterized in that** the flat transitable structure (3) incorporates handrails (11), collapsible on the surface of said structure, hinged on its sides.

7. A platform according to claim 1, **characterized in that** the flat transitable structure (3) incorporates hinged on its transverse edges, respective front and rear covers (12-13) of different widths, both capable of swiveling between a collapsed position on the surface of said structure, and another use position, in which the front plate (12) covers the distance between said structure and the ground, and the rear plate (13) covers the distance between the structure and the vehicle.

## Patentansprüche

1. Heberampe für den Zutritt zu Fahrzeugen, umfassend ein Ausfahrgestell und eine vorne am Ausfahrgestell durch seitliche Hebearme (14-15) befestigte, ebene, stabile und bewegliche Ladefläche (3), **dadurch gekennzeichnet, dass** die Heberampe außerdem ein Gehäuse (1) mit einem annähernd rechteckigen Aufbau nach Art eines geraden Prismas und mit einer offenen Seite hat, wobei das Ausfahrgestell auf innerhalb des Gehäuses senkrecht zu der offenen Seite verlaufenden Führungen (5) angeordnet und mit Antriebsmitteln zu dessen Bewegung auf diesen Führungen versehen ist, wobei die Ladefläche (3) mit dem Fahrgestell reziprokal aus der eingefahrenen Position, in der sie sich im Gehäuse (1) befindet, in eine ausgefahrene Position, in der sie sich außerhalb des Gehäuses befindet, bewegbar ist, und wobei die stabile Ladefläche außerdem durch Hebezylinder (20) mit dem Ausfahrgestell verbunden ist.

2. Rampe gemäß Anspruch 1, **dadurch gekennzeichnet, dass** die Führungen (5) aus Schienen bestehen, die an der Innenseite der Gehäusewand senkrecht zur offenen Seite über Riemenscheiben (4) montiert sind, welche eine teilweise Längsbewegung der Schienen ermöglichen, wobei das Ausfahrgestell (2) seinerseits an den Seiten mit Rädern ausgestattet ist, um ein Aufliegen und Gleiten des Ausfahrgestells zu ermöglichen und eine begrenzte Relativbewegung der Schienen und des Ausfahrgestells zu gestatten.

3. Rampe gemäß Anspruch 1, **dadurch gekennzeichnet, dass** die Antriebsmittel für das Ausfahrgestell aus einem auf diesem montierten Motor bestehen, der ein mit einer im Gehäuse fest angebrachten Zahnstange (8) zusammenwirkendes Zahnrad antreibt, wobei sich die Zahnstange (8) senkrecht zur offenen Seite des Gehäuses erstreckt.

4. Rampe gemäß Anspruch 1, **dadurch gekennzeichnet, dass** die die Ladefläche (3) mit dem Ausfahrgestell (2) verbindende Seitenarme auf jeder Seite je zwei horizontale und parallele Arme, d.h. einen oberen Arm (14) und einen unteren Arm (15) aufweist, die in der gleichen Vertikalebene angeordnet sind, wobei sie zwischen den Enden der entsprechenden Platten, je eine vordere (16) und eine hintere Platte (17), klappbar eingehängt sind und die Arme und die Platten ein mittels Scharnieren verbundenes Parallelogramm bilden, das über die hintere Platte (17) mit dem Ausfahrgestell (2) verbunden ist, während die stabile Ladefläche (3) mit der vorderen Platte (16) gekoppelt und an ihr befestigt ist.

5. Rampe gemäß Anspruch 4, **dadurch gekennzeichnet, dass** der untere Arm (15) beider Armpaare am vorderen Ende mit einem Rad versehen ist, das beim Einfahren der Arme ins Gehäuse auf dem Gehäuseboden aufliegt.

6. Rampe gemäß Anspruch 1, **dadurch gekennzeichnet, dass** die Ladefläche (3) auf ihr zusammenklappbare Handgeländer (11) umfasst, die an den Seiten mit Scharnieren aufgehängt sind.

7. Rampe gemäß Anspruch 1, **dadurch gekennzeichnet, dass** die Ladefläche (3) an ihren Querseiten je eine vordere bzw. eine hintere Klappe (12-13) mit unterschiedlicher Breite aufweist, die mit Scharnieren mit der jeweiligen Querseite verbunden und jeweils in der Lage sind, reziprokal aus einer zusammengeklappten Position auf der Oberfläche der Ladefläche in eine Einsatzposition zu schwenken, in der die vordere Platte (12) den Abstand zwischen Ladefläche und dem Erdboden und die hintere Platte (13) den Abstand zwischen Ladefläche und Fahrzeug überbrückt.

## Revendications

1. Plateforme levable pour un accès de personnes à des véhicules comprenant un chariot et une structure plate, résistante et transportable (3) reliée au chariot dans la partie avant de celui-ci au moyen de bras de levage coulissants (14 - 15), **caractérisée en ce qu'**elle comprend en outre un boîtier (1) ayant une configuration prismatique droite approximativement rectangulaire, ouvert au niveau d'une de ses parois ; le chariot étant monté à l'intérieur du boîtier au moyen de guides (5) perpendiculaires à la paroi ouverte, et pourvu de moyens d'entraînement destinés à se déplacer sur lesdits guides, la structure (3) étant mobile avec ledit chariot entre une position de rétraction, dans laquelle il reste logé dans le boîtier (1) et une position d'extraction, dans laquelle il reste en dehors dudit boîtier ; la structure résistante étant également reliée au chariot au moyen de cylindres de levage (20).

2. Plateforme selon la revendication 1, **caractérisée en ce que** les guides (5) sont composés de pistes, assemblées sur la surface intérieure des parois du boîtier perpendiculaire à la paroi ouverte de celui-ci par le biais de poulies (4) permettant le mouvement longitudinal partiel desdites pistes, le chariot (2) étant à son tour pourvu sur ses côtés de roues (6) destinées à reposer et à coulisser sur lesdites pistes, pour permettre un mouvement relatif partiel des pistes et du chariot.

3. Plateforme selon la revendication 1, **caractérisé en ce que** les moyens d'entraînement du chariot comprennent un moteur assemblé sur ledit chariot et entraînant un pignon s'engrenant avec une crémaillère solidement fixée (8) du boîtier (1), qui court dans une direction perpendiculaire à la paroi ouverte dudit boîtier.

4. Plateforme selon la revendication 1, **caractérisée en ce que** les bras latéraux reliant la structure plate (3) au chariot (2) comprennent deux bras horizontaux et parallèles de chaque côté, un bras supérieur (14) et un bras inférieur (15), situés sur le même plan vertical, entre les extrémités desquels des plaques respectives, une plaque avant (16) et une plaque arrière (17) sont articulées, les bras et les plaques définissant un parallélogramme articulé, relié au chariot (2) à travers la plaque arrière (17), alors que la structure résistante transportable (3) est couplée et fixée à la plaque avant (16).

5. Plateforme selon la revendication 4, **caractérisée en ce que** le bras inférieur (15) de chaque paire de bras est pourvu, à proximité de son extrémité avant, d'une roue (30) reposant sur le fond du boîtier lors de la rétraction desdits bras à l'intérieur du boîtier.

6. Plateforme selon la revendication 1, **caractérisée en ce que** la structure transportable plate (3) incorpore des rampes (11), pliables sur la surface de ladite structure, articulées sur ses côtés.

7. Plateforme selon la revendication 1, **caractérisée en ce que** la structure transportable (3) incorpore, articulés sur ses bords transversaux, des couvercles respectifs avant et arrière (12 - 13) de différentes largeurs, capables de pivoter entre une position affaissée sur la surface de ladite structure et une autre position d'utilisation, dans laquelle la plaque avant (12) couvre la distance entre ladite structure et le sol et la plaque arrière (13) couvre la distance entre la structure et le véhicule.
